# EUROPÄISCHE PATENTSCHRIFT

(11) **EP 3 973 218 B1**
(45) Veröffentlichungstag und Bekanntmachung des Hinweises auf die Patenterteilung: **26.04.2023**
(21) Anmeldenummer: 20714145.8
(22) Anmeldetag: 13.03.2020
(51) Int. Cl.: F16L 11/22, F16L 11/16, F16L 33/213, F16L 11/10, F16L 33/01

(54) **SCHLAUCHLEITUNG**
HOSE LINE
CONDUITE DE TUYAU FLEXIBLE

(30) Priorität: 20.05.2019 DE 202019102837 U
(43) Veröffentlichungstag der Anmeldung: 30.03.2022
(73) Patentinhaber: Neoperl GmbH, 79379 Müllheim (DE)
(72) Erfinder: REINHARDT, Holger, 79232 March/Buchheim (DE)
(74) Vertreter: Mertzlufft-Paufler, Cornelius
(86) Internationale Anmeldenummer: PCT/EP2020/056997
(87) Internationale Veröffentlichungsnummer: WO 2020/233860

(56) Entgegenhaltungen:
- DE-A1- 4 003 379
- DE-A1- 19 501 770
- US-A- 1 928 837
- US-A- 2 795 041
- US-A- 2 974 712
- US-A- 3 479 713
- US-A- 5 042 537
- US-A- 5 285 744
- US-A1- 2010 154 915

## Beschreibung

Die Erfindung befasst sich mit einer Schlauchleitung, die als Zwei- oder Mehrkammer-Schlauchleitung ausgebildet ist und einen Außenschlauch hat, dessen lichten Schlauchquerschnitt wenigstens ein innenliegender Schlauch durchsetzt, wobei dem Außenschlauch zumindest eine Schlauchkupplung mit einem Schlauchnippel zugeordnet ist, welchen Schlauchnippel ein zugeordneter Schlauchendbereich des Außenschlauches dicht umgreift, wobei die Schlauchkupplung eine stirnseitige Aufnahmehöhlung hat, in der ein Schlauchanschluss für den zumindest einen innenliegenden Schlauch vorgesehen ist, welcher Schlauchanschluss einen in die Aufnahmehöhlung der Schlauchkupplung einsetzbares Außenteil hat, in welchem Außenteil zumindest zwei, das Außenteil durchsetzende Löcher vorgesehen sind, von denen zumindest in einem Loch das Außenteil einen Schlauchendbereich des wenigstens einen innenliegenden Schlauches umgreift, und wobei in den Schlauchendbereich des wenigstens einen innenliegenden Schlauches ein Innenteil des Schlauchanschlusses vorsteht, welches Innenteil derart aufgeweitet ist, dass der innenliegende Schlauch zwischen dem, in diesen innenliegenden Schlauch vorstehenden Innenteil und dem Außenteil dicht und fixierend eingespannt ist.

Um Waschbecken, Handbrausen, Geschirrspüler, Waschmaschinen oder andere Wasser-Verbrauchsstellen an das Wasserleitungsnetz anschließen zu können, werden zunehmend flexible Schlauchleitungen verwendet, die an ihrem einen Leitungsende an einem Eckventil angeschlossen und an ihrem anderen Leitungsende mit der Wasser-Verbrauchsstelle verbunden sind. Diese Schlauchleitungen weisen regelmäßig einen Schlauch aus flexiblem Material mit einem Schlauchanschluss auf, der an wenigstens einem der Schlauchendbereiche des flexiblen Schlauches fixiert ist (vgl. Fig. 30 der vorliegenden Schutzrechtsanmeldung). Dieser Schlauchanschluss hat ein in den lichten Schlauchquerschnitt einführbares Innenteil, das als hülsenförmiges formstabiles Guss- oder Drehteil ausgebildet ist und in seinem in das Schlauchinnere eingeschobenen Teilbereich außenumfangsseitig eine Halteprofilierung aus mehreren Haltenuten hat. Der auf das Innenteil aufgeschobene Schlauchendbereich wird mit Hilfe eines Außenteils fixiert, das als vercrimpbare Quetschhülse ausgebildet ist und in vercrimptem Zustand den Schlauchendbereich zwischen sich und dem Innenteil einspannt. An dem über den Schlauchendbereich überstehenden Teilbereich des Innenteils kann ein Ringflansch vorgesehen sein, der als Schiebeanschlag für eine den Schlauchanschluss umgreifende Überwurfmutter dient und diese Überwurfmutter auf dem Innenteil sichert. Um das Innenteil in den Schlauchendbereich einschieben zu können, muss das Innenteil an seinem Innenteil-Ende einen Einschiebekonus aufweisen, der einen gegenüber dem lichten Schlauchdurchmesser reduzierten Durchmesser des Innenteils erfordert. Dadurch steht aber das Innenteil am Innenumfang des Schlauches vor und reduziert den freien Leitungsquerschnitt in diesem Leitungsabschnitt. Darüber hinaus ist die Herstellung des Innenteils als Dreh- oder Gussteil und das Vercrimpen des als Quetschhülse ausgebildeten Außenteils mit einem nicht unerheblichen Aufwand verbunden. Der Konstruktions- und Herstellungsaufwand für solche Schlauchleitungen wird noch zusätzlich erhöht, wenn solche Schlauchleitungen als Zwei-Kammer- oder Mehrkammer-Schlauchleitungen ausgebildet sind, die zwei oder mehrere Kammern aufweisen, die als voneinander getrennte Flüssigkeitsführungen dienen.

Aus der US 1 928 837 A kennt man bereits einen, insbesondere für eine Hochdruckleitung bestimmten Schlauchanschluss, der am Schlauchendbereich zumindest eines flexiblen Schlauches fixierbar ist und der dazu ein den Schlauchendbereich des zumindest einen Schlauches umgreifendes Außenteil und ein in den lichten Schlauchquerschnitt einführbares Innenteil aufweist. Während an dem hülsenförmigen Außenteil ein Außengewinde vorgesehen ist, mit dem sich das Außenteil im Innengewinde eines Kupplungsgegenstücks des vorbekannten Schlauchanschlusses verschrauben lässt, ist das Innenteil dazu bestimmt, den Schlauchendbereich des flexiblen Schlauches in einer Gebrauchsstellung am Außenteil belastbar und fest zu fixieren. Das Innenteil des vorbekannten Schlauchanschlusses ist dazu als Hohlniet ausgebildet und zwischen einer, in den lichten Schlauchquerschnitt des Schlauchendbereichs einführbaren Ausgangsform und einer Aufweitform verformbar, in welcher der Gebrauchsstellung entsprechenden Aufweitform das Innenteil den zumindest einen Schlauch zwischen sich und dem Außenteil dicht und fixierend einspannt. Da in der mit dem vorbekannten Schlauchanschluss verbundenen Schlauchleitung nur ein Fluid geführt werden kann, sind mehrere solcher, jeweils mit dem vorbekannten Schlauchanschluss verbundener Schlauchleitungen notwendig, um beispielsweise Heißwasser, Kaltwasser und karbonisiertes Wasser zu einer gemeinsamen Zapfstelle zu führen. Die Verwendung mehrerer solcher Schlauchleitungen ist jedoch platzraubend und aufwendig.

Aus der US 5 285 744 A kennt man bereits eine Schlauchleitung der eingangs erwähnten Art, die als Zwei- oder Mehrkammer-Schlauchleitung ausgebildet ist. Bei der vorbekannten Schlauchleitung ist ein flexibler erster Innenschlauch beispielsweise als Kraftstoffzufuhrkanal und ein ebenfalls flexibler zweiter Innenschlauch als Kraftstoffdampfrücklaufkanal vorgesehen, wobei diese Innenschläuche ihrerseits gemeinsam im Schlauchinneren eines gewellten Außenschlauches geführt sind. Dabei ist dem Außenschlauch zumindest eine Schlauchkupplung mit einem Schlauchnippel zugeordnet, welchen Schlauchnippel ein zugeordneter Schlauchendbereich des Außenschlauches dicht umgreift. Die Schlauchkupplung der vorbekannten Schlauchleitung weist eine stirnseitige Aufnahmehöhlung auf, in der Schlauchanschlüsse für die Innenschläuche vorgesehen sind. Der Schlauchanschluss hat ein in die Aufnahmehöhlung der Schlauchkupplung einsetzbares Außenteil, in welchem Außenteil zumindest zwei, das Außenteil durchsetzende Löcher vorgesehen sind, von denen zumindest in einem Loch das Außenteil einen Schlauchendbereich wenigstens eines der innenliegenden Schläuche umgreift und wobei in den Schlauchendbereich zumindest des als Kraftstoffdampfrücklaufkanal bestimmten Innenschlauches ein Innenteil des Schlauchanschlusses vorsteht, welches Innenteil derart aufgeweitet ist, dass der innenliegende Schlauch zwischen dem, in diesen innenliegenden Schlauch vorstehenden Innenteil und dem Außenteil dicht und fixierend eingespannt ist.

Die Ausgestaltung der aus US 5 285 744 A vorbekannten Schlauchleitung mit einem als Außenschlauch dienenden Wellschlauch, in dem zumindest zwei Innenschläuche angeordnet sind, und die Verbindung des Außenschlauches sowie der in ihm geführten Innenschläuche ist mit einem erheblichen Aufwand verbunden.

Es besteht daher die Aufgabe, eine Zwei- oder Mehrkammer-Schlauchleitung der eingangs erwähnten Art zu schaffen, die mit einem demgegenüber reduzierten Herstellungsaufwand verbunden ist.

Die erfindungsgemäße Lösung dieser Aufgabe besteht bei der Schlauchleitung der eingangs erwähnten Art darin, dass das Außenteil einen in die Aufnahmehöhlung der Schlauchkupplung einsetzbaren topfförmigen Teilbereich hat, und dass am Topfboden dieser Topfform ein hülsenförmiger Teilbereich reduzierten Querschnitts vorsteht, in welchem hülsenförmigen Teilbereich des Außenteils der Schlauchendbereich des innenliegenden Schlauches mittels dem Innenteil des Schlauchanschlusses dicht und fixierend eingespannt ist, und dass in jedem der Löcher im Außenteil des Schlauchanschlusses der Schlauchendbereich jeweils eines innenliegenden Schlauches dicht und fixierend gehalten ist.

Der erfindungsgemäße Schlauchleitung ist als Zwei- oder Mehrkammer-Schlauchleitung ausgestaltet, in der zwei oder mehr als zwei Fluidführungen getrennt voneinander geführt sind. Die erfindungsgemäße Schlauchleitung weist dazu einen Außenschlauch auf, dessen lichten Schlauchquerschnitt wenigstens ein innenliegender Schlauch durchsetzt. Dem Außenschlauch ist zumindest eine Schlauchkupplung mit einem Schlauchnippel zugeordnet, welchen Schlauchnippel ein zugeordneter Schlauchendbereich des Außenschlauches dicht umgreift. Die an zumindest einem der beiden Schlauchendbereiche der Schlauchleitung vorgesehene Schlauchkupplung hat eine stirnseitige Aufnahmehöhlung, in der ein Schlauchanschluss für den zumindest einen innenliegenden Schlauch vorgesehen ist. Dieser Schlauchanschluss weist ein Außenteil auf, das in die Aufnahmehöhlung der dem Außenschlauch zugeordneten Schlauchkupplung einsetzbar ist. In dem Außenteil des Schlauchanschlusses sind zumindest zwei, das Außenteil durchsetzende Löcher vorgesehen, von denen zumindest in einem Loch das Außenteil einen Schlauchendbereich des wenigstens einen innenliegenden Schlauches umgreift. In den Schlauchendbereich des wenigstens einen innenliegenden Schlauches steht ein Innenteil des Schlauchanschlusses vor, wobei das Innenteil derart aufgeweitet ist, dass der innenliegende Schlauch zwischen dem, in diesen Schlauch vorstehenden Innenteil und dem Außenteil dicht und fixierend eingespannt ist. Die erfindungsgemäße Schlauchleitung lässt sich mit geringem Aufwand herstellen und montieren, obwohl diese Schlauchleitung zumindest zwei Fluidführungen getrennt voneinander durchziehen.

Dabei ist für die erfindungsgemäße Schlauchleitung kennzeichnend, dass in jedem der Löcher im Außenteil des Schlauchanschlusses der Schlauchendbereich jeweils eines innenliegenden Schlauches dicht und fixierend gehalten ist. Jeder der voneinander getrennten Fluidführungen ist jeweils ein innenliegender Schlauch zugeordnet, während demgegenüber der Außenschlauch lediglich eine weitere schützende Hülle für die in seinem Schlauchinneren geführten innenliegenden Schläuche bildet.

Um die verschiedenen Fluidführungen gegebenenfalls auch in unterschiedlichen Ebenen der Schlauchkupplung ankuppeln zu können, ist erfindungsgemäß vorgesehenen, dass das Außenteil einen in die Aufnahmehöhlung der Schlauchkupplung einsetzbaren topfförmigen Teilbereich hat, und dass am Topfboden dieser Topfform ein hülsenförmiger Teilbereich reduzierten Querschnitts vorsteht, in welchen hülsenförmigen Teilbereich des Außenteils der Schlauchendbereich des innenliegenden Schlauches mittels dem Innenteil des Schlauchanschlusses dicht und fixierend eingespannt ist.

Eine besonders einfache und leicht zu montierende Ausführungsform gemäß der Erfindung sieht vor, dass das Innenteil als Durchziehniet ausgebildet ist.

Denkbar ist, dass das Innenteil als bundloser, an seinem Außenumfang zylindrischer Hohlniet ausgebildet ist.

Um die positionsgenaue Montage des Innenteils und des Außenteils sowie des dazwischen eingespannten

Schlauchendbereichs zu erleichtern, ist es jedoch vorteilhaft, wenn das Innenteil an seinem über den Schlauchendbereich vorstehenden Stirnende einen radial nach außen vorstehenden Ringflansch trägt. Somit lässt sich das als Hohlniet ausgestaltete Innenteil in seiner unverformten Ausgangsform in den lichten Schlauchquerschnitt am Schlauchendbereich des flexiblen Schlauches einführen, bis der Ringflansch an der benachbarten Stirnseite des Schlauches anschlägt.

Damit sich der erfindungsgemäße Schlauchanschluss sicher und dicht an einer Fluidleitung anschließen lässt, ist es vorteilhaft, wenn der Ringflansch des Innenteils sich zu seinem Außenrand hin verjüngt und/oder wenn der Ringflansch an seiner dem Schlauchendbereich abgewandten Stirnseite eine vorzugsweise konvex gewölbte Formgebung hat.

Die positionsgenaue Montage des Innenteils am Außenteil des erfindungsgemäßen Schlauchquerschnittes wird noch begünstigt, wenn das Innenteil in den lichten Schlauchquerschnitt einführbar ist, bis der Ringflansch am benachbarten Stirnende des Außenteils anliegt. Da der am Innenteil vorgesehene Ringflansch in der montierten Position des Schlauchanschlusses am benachbarten Stirnende des Außenteils anliegt, und da der Ringflansch somit in seiner außenliegenden Ringzone durch das Außenteil zusätzlich abgestützt wird, zeichnet sich der erfindungsgemäße Schlauchanschluss auch in diesem Bereich durch eine hohe Stabilität aus.

### Das Einführen des Innenteils in den lichten

Schlauchquerschnitt des Schlauches wird begünstigt und ein kontrolliertes Verformen des Innenteils während des Aufweitens wird erleichtert, wenn das Innenteil in einem hülsenförmigen Teilbereich eine Wandungsstärke hat, die in Richtung zu dem dem Schlauchendbereich abgewandten Stirnende des Innenteils und insbesondere zu dessen Ringflansch hin zunimmt.

Damit der Schlauchendbereich zwischen dem Außenteil und dem aufgeweiteten Innenteil sicher und fest gehalten ist, ist es vorteilhaft, wenn der Hohlniet an seinem hülsenförmigen Teilbereich außenumfangsseitig eine Halteprofilierung trägt.

Eine einfache und vorteilhafte Ausführungsform gemäß der Erfindung sieht vor, dass diese Halteprofilierung wenigstens eine umlaufende Haltenut hat.

Um das als Leitungsanschluss des innenliegenden Schlauches vorgesehene Außenteil im Bereich der Schlauchkupplung gut abdichten zu können, ist es zweckmäßig, wenn das Außenteil zumindest an seinem vorstehenden hülsenförmigen Teilbereich wenigstens eine Ringnut für eine Ringdichtung aufweist. Zusätzlich oder stattdessen kann es vorteilhaft sein, wenn am Außenteil eine axiale Dichtung oder eine Formdichtung vorgesehen ist, gegebenenfalls auch in der Ausführung einer sogenannten Brillendichtung.

Weiterbildungen ergeben sich aus der nachfolgenden Figurenbeschreibung einschließlich der Ansprüche.

Es zeigt:
- Fig. 1: eine Mehrkammer-Schlauchleitung in einem Längsschnitt, wobei den Außenschlauch der Schlauchleitung drei voneinander getrennte Fluidführungen durchziehen, von denen zwei Fluidführungen durch, im Schlauchinneren des Außenschlauches geführte innenliegende Schläuche gebildet sind,
- Fig. 2: die Schlauchleitung aus Fig. 1 in einer Perspektivdarstellung auf den eine Schlauchkupplung aufweisenden Endbereich ihres Außenschlauches, und
- Fig. 3: eine Schlauchleitung mit einem flexiblen Schlauch, der zumindest an seinem einen Schlauchendbereich einen gemäß dem vorbekannten Stand der Technik ausgebildeten Schlauchanschluss trägt.

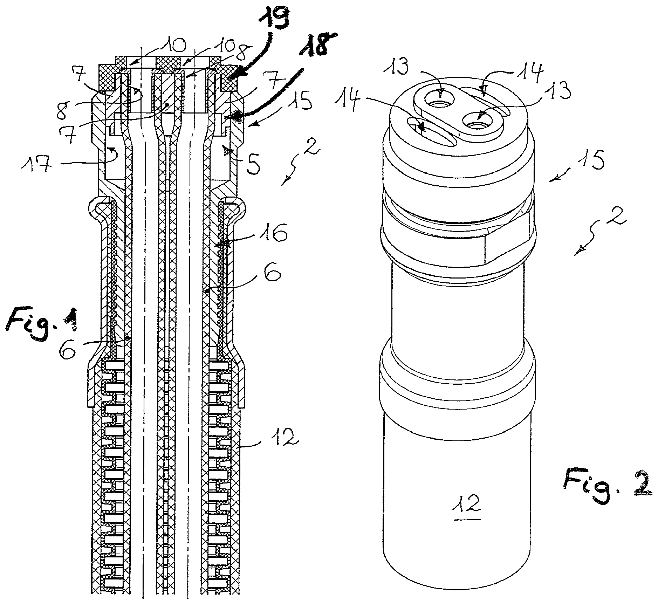

Die Ausführung der Fig. 1 und 2 fällt nicht unter den Wortlaut der Ansprüche, wird aber als das Verständnis der Erfindung erleichternd angesehen.

In den Fig. 1 und 2 ist eine Ausführung 2 einer flexiblen Schlauchleitung dargestellt, die an zumindest einem ihrer Schlauchendbereiche einen Schlauchanschluss 5 trägt.

Die Schlauchleitungen 2 weist Schläuche 6 auf, die an zumindest einem ihrer beiden Schlauchendbereiche einen Schlauchanschluss 5 tragen. Mit Hilfe des Schlauchanschlusses 5 lässt sich die Fluidführung zuström- oder abströmseitig an weitere Leitungsabschnitte anschließen und die Fluidführung fortsetzen.

Der Schlauchanschluss 5 weist dazu ein den Schlauchendbereich der Schläuche 6 umgreifendes Außenteil 7 und ein in den lichten Schlauchquerschnitt der Schläuche 6 einführbares Innenteil 8 auf. Dabei ist das Innenteil 8 als Hohlniet ausgebildet und zwischen einer, in den lichten Schlauchquerschnitt des Schlauchendbereichs der Schläuche 6 einführbaren Ausgangsform und einer Aufweitform verformbar. In dieser Aufweitform ist der betreffende Schlauch 6 zwischen dem Innenteil 8 und dem Außenteil 7 des Schlauchanschlusses 5 dicht und fixierend eingespannt.

Der als Innenteil 8 dienende Hohlniet ist hier als Durchziehniet ausgebildet, der sich mit Hilfe des am Nietende eines Nietstiftes vorgesehenen Aufweitkopfs aufweiten lässt. Statt eines solchen Nietstiftes kann zum Aufweiten des Innenteils 8 auch ein hier nicht weiter dargestellter Aufweitdorn verwendet werden, der gegebenenfalls auch mehrere, in radialer Richtung aufspreizbare Aufweitteile hat.

Die Innenteile 8 des an den Schlauchleitung 2 vorgesehenen Schlauchanschlusses 5 weisen jeweils einen radial nach außen vorstehenden Ringflansch 10 auf, der an dem über den Schlauchendbereich vorstehenden Stirnende des Innenteils 8 angeordnet ist. Um eine dichte Verbindbarkeit des Schlauchanschlusses 5 mit dem benachbarten Leitungsabschnitt der Fluidführung zu begünstigen, kann es vorteilhaft sein, wenn der Ringflansch 10 des Innenteils 8 sich zu seinem Außenrand hin verjüngt und an seiner dem Schlauchendbereich abgewandten Stirnseite insbesondere eine konvex gewölbte Formgebung hat.

Das Innenteil 8 ist in den lichten Schlauchquerschnitt der in der Schlauchleitung 2 vorgesehenen Schläuche 6 einführbar, bis der Ringflansch 10 am benachbarten Stirnende des Außenteils 7 anliegt.

Um eine kontrollierte Aufweitung des Innenteils zu erleichtern und um den Aufweitvorgang während des Aufweitens des Innenteils 8 zunehmend zu erschweren, kann es vorteilhaft sein, wenn das Innenteil 8 in seinem hülsenförmigen Teilbereich eine Wandungsstärke hat, die in Richtung zu dem dem Schlauchendbereich abgewandten Stirnende und somit zu dessen Ringflansch 10 hin zunimmt.

In der Aufweitform des Innenteils 8 ist der Schlauchendbereich des Schlauches 6 zwischen dem Innenteil 8 und dem Außenteil 7 unverrückbar fest und dicht eingespannt. Damit der auf den hülsenförmigen Teilbereich des Innenteils 8 aufgeschobene Schlauchendbereich auch durch hohe axiale Kräfte nicht wieder vom Schlauchanschluss 5 abgezogen werden kann, trägt das als Hohlniet ausgebildete Innenteil 8 an seinem hülsenförmigen Teilbereich außenumfangsseitig eine Halteprofilierung, die wenigstens eine umlaufende Haltenut aufweist. An dem hülsenförmigen Teilbereich des Innenteils 8 sind vorzugsweise mehrere, voneinander beabstandete Haltenuten vorgesehen.

Der am Innenteil 8 vorgesehene Ringflansch 10 kann auf einfache Weise als Krempe hergestellt werden.

In einem ersten Verfahrensschritt zunächst das Innenteil 8 in dem vom Außenteil 7 umgriffenen Schlauchendbereich des Schlauches 5 eingesetzt werden. Durch Durchziehen des Nietstiftes durch das als Hohlniet und insbesondere als Durchziehniet ausgebildete Innenteil 8 wird das Innenteil 8 in zumindest einem nachfolgenden zweiten Verfahrensschritt derart aufgeweitet, dass der Schlauch 5 zwischen dem Innenteil 8 und dem Außenteil 7 unverrückbar und dicht eingespannt ist. Sofern das Innenteil 8 vergleichsweise weit aufgeweitet werden muss, kann es notwendig sein, dass der als Innenteil 8 dienende Hohlniet zum Einspannen des Schlauches 5 zwischen ihm und dem Außenteil 7 in mehreren einander nachfolgenden Verfahrensschritten aufgeweitet wird. Sofern nicht ein Aufweitdorn verwendet wird, der sich zunehmend radial aufspreizen lässt, kann es zweckmäßig sein, für die einander nachfolgenden Verfahrensschritte einen gestuften Nietstift oder zumindest einen gestuften Aufweitdorn mit unterschiedlichen Aufweitdurchmessern zu verwenden. Möglich ist auch, mehrere gestufte oder ungestufte Aufweitdorne mit unterschiedlichen Aufweitdurchmessern zu benutzen.

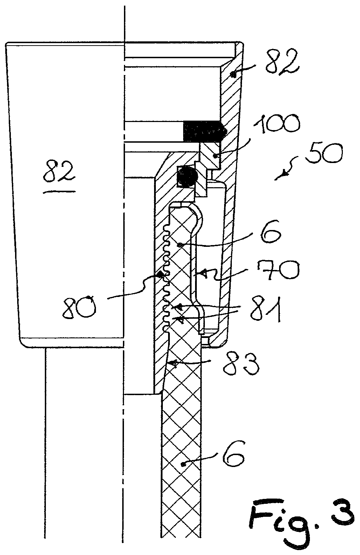

Der Schlauchanschluss 5 kann auch als Schiebeanschlag für eine den Schlauchendbereich des Schlauches 6 umgreifende Überwurfmutter dienen. Eine solche Überwurfmutter ist hier zwar nicht dargestellt, aber aus dem auch in Fig. 3 gezeigten Stand der Technik sehr wohl bekannt. Der Ringflansch 10 steht dazu radial über den Außenumfang des Schlauches 6 vor und kann mit einem Ringabsatz am Innenumfang der Überwurfmutter zusammenwirken.

Der Schlauch 6 kann auch als Wickelschlauch und insbesondere als sogenannter Agraffschlauch ausgebildet sein kann.

Möglich ist auch, dass der Schlauchanschluss 5 der Schlauchleitung 4 an einem Schlauch 6 aus flexiblem Material und insbesondere aus flexiblem Kunststoffmaterial montiert ist. Dabei kann der über den Außendurchmesser des Schlauches 6 überstehende Ringflansch 10 auf dem benachbarten Stirnrand des Außenteils 7 aufliegen und dort zusätzlich abgestützt werden. Um den sicheren Halt des zwischen dem Innenteil 8 und dem Außenteil 7 eingespannten Schlauchendbereichs am Schlauchanschluss 5 zu begünstigen, wird das als Hohlniet ausgebildete Innenteil 8 bis zu seinem Ringflansch 10 in den lichten Schlauchquerschnitt der Schläuche 6 der Schlauchleitung 4 in deren Schlauchendbereich eingeschoben.

In den Fig. 1 und 2 ist dargestellt, dass die Schlauchleitung 2 als Zwei- oder Mehrkammer-Schlauchleitung ausgebildet ist. Die Schlauchleitung 2 weist dazu einen Außenschlauch 12 auf, dessen lichten Schlauchquerschnitt wenigstens ein Innenschlauch durchsetzt. Diesem Außenschlauch 12 ist zumindest eine Schlauchkupplung 15 mit einem Schlauchnippel 16 zugeordnet, welchen Schlauchnippel 16 ein zugeordneter Schlauchendbereich des Außenschlauches 12 dicht umgreift. Die Schlauchkupplung 15 mit dem Schlauchnippel 16 weist eine stirnseitige Aufnahmehöhlung 17 auf, in welcher Aufnahmehöhlung 17 der Schlauchanschluss 5 für die innenliegende Schläuche 6 vorgesehen ist.

Der an der Schlauchleitung 2 fixierte Schlauchanschluss 5 weist ein in die Aufnahmehöhlung 17 einsetzbares Außenteil 7 auf, in welchem Außenteil zumindest zwei, das Außenteil 7 durchsetzende Löcher 13, 14 vorgesehen sind. Zumindest in einem Loch 13 umgreift das Außenteil 7 einen Schlauchendbereich eines der innenliegenden Schläuche 6. In den Schlauchendbereich des innenliegenden Schlauches 6 steht ein auch hier als Hohlniet ausgebildetes Innenteil 8 des Schlauchanschlusses 5 vor. Dieses Innenteil 8 ist derart aufgeweitet, dass der zumindest eine, im Außenschlauch 12 innenliegende Schlauch 6 zwischen dem, in diesen innenliegenden Schlauch 6 vorstehenden Innenteil 8 und dem Außenteil 7 dicht und fixierend eingespannt ist.

Die in den Fig. 1 und 2 gezeigte Schlauchleitung 2 weist drei voneinander getrennte Fluidführungen auf. Während zwei Fluidführungen durch die durch den Außenschlauch 12 geführten innenliegenden Schläuche 6 gebildet werden, ist auch hier eine weitere Fluidführung vorgesehen, die durch das zwischen den Innenschläuchen 6 und dem Innenumfang des Außenschlauches 12 verbleibende Schlauchlumen des Außenschlauches 12 führt.

In einem hier allerdings nicht dargestellten, jedoch erfindungsgemäßen Ausführungsbeispiel ist in jedem der Löcher 13, 14 im Außenteil 7 des Schlauchanschlusses 5 der Schlauchendbereich jeweils eines innenliegenden Schlauches 6 dicht und fixierend gehalten.

Die in den Fig. 1 und 2 dargestellte Mehrkammer-Schlauchleitung 2 weist drei voneinander getrennte Fluidführungen auf, von denen eine Fluidführung beispielsweise für Heißwasser, eine weitere Fluidführung für Sprudelwasser sowie die dritte Fluidführung beispielsweise für Leitungswasser verwendet werden kann, wenn diese Mehrkammer-Schlauchleitung 2 beispielsweise als Küchenauszugsschlauch verwendbar sein soll. Um die Schlauchkupplung 15 der Schlauchleitung 2 mit benachbarten Leitungsabschnitten dicht verbinden zu können, kann an der Stirnseite der Schlauchkupplung 15 eine Form- oder Brillendichtung, insbesondere gemäß dem Poka Yoke System, vorgesehen sein.

In Fig. 3 ist eine Schlauchleitung mit einem zum Stand der Technik zählenden Schlauchanschluss 50 dargestellt. Auch die in Fig. 30 gezeigte Schlauchleitung weist einen Schlauch aus flexiblem Material mit einem Schlauchanschluss 50 auf, der an wenigstens einem der Schlauchendbereiche des flexiblen Schlauches fixiert ist. Dieser Schlauchanschluss 50 hat ein in den lichten Schlauchquerschnitt einführbares Innenteil 80, das als hülsenförmiges formstabiles Guss- oder Drehteil ausgebildet ist und in seinem in das Schlauchinnere des flexiblen Schlauches eingeschobenen Teilbereich außenumfangsseitig eine Halteprofilierung aus mehreren umlaufenden Haltenuten 81 hat. Der auf das Innenteil 80 aufgeschobene Schlauchendbereich des Schlauches wird mit Hilfe eines Außenteils 70 fixiert, dass als vercrimpbare Quetschhülse ausgebildet ist und in vercrimptem Zustand den Schlauchendbereich des flexiblen Schlauches zwischen sich und dem Innenteil 80 einspannt. An dem über den Schlauchendbereich überstehenden Teilbereich des Innenteils 80 ist ein Ringflansch 100 vorgesehen, der als Schiebeanschlag für eine, den Schlauchanschluss 50 der vorbekannten Schlauchleitung umgreifende Überwurfmutter 82 dient und diese Überwurfmutter 82 auf dem Innenteil 80 sichert. Um das Innenteil 80 in den Schlauchendbereich des flexiblen Schlauches einschieben zu können, muss das Innenteil an seinem Innenteil-Ende einen Einschiebekonus 83 aufweisen, der einen gegenüber dem lichten Schlauchdurchmesser des flexiblen Schlauches reduzierten Durchmesser des Innenteils 80 erfordert. Dadurch steht aber das Innenteil 80 am Innenumfang des Schlauches vor und reduziert den freien Leitungsquerschnitt in diesem Leitungsabschnitt. Darüber hinaus ist die Herstellung des Innenteils 80 als Drehteil und das Vercrimpen des als Quetschhülse ausgebildeten Außenteils 70 mit einem nicht unerheblichen Aufwand verbunden. Der Konstruktions- und Herstellungsaufwand der in Fig. 30 dargestellten und zum Stand der Technik zählenden Schlauchleitung wird noch zusätzlich erhöht, wenn eine solche Schlauchleitung als Zweikammer- oder Mehrkammer-Schlauchleitung ausgebildet sein soll, die zwei oder mehrere Fluidführungen aufweist.

Demgegenüber ist die in den Fig. 1 und 2 dargestellte Schlauchleitung 2 mit einem erheblich geringeren Aufwand herstellbar.

### Bezugszeichenliste

- 2: Schlauchleitung gemäß den Fig. 12 und 13
- 5: Schlauchanschluss
- 6: Schlauch
- 7: Außenteil
- 8: Innenteil
- 10: Ringflansch
- 12: Außenschlauch
- 13: Loch (mit Innenschlauch)
- 14: Loch (im Außenteil 7)
- 15: Schlauchkupplung
- 16: Schlauchnippel
- 17: Aufnahmehöhlung
- 18: topfförmiger Teilbereich
- 19: hülsenförmiger Teilbereich
- 50: Schlauchanschluss
- 70: Außenteil (in Fig. 30)
- 80: Innenteil (in Fig. 30)
- 81: Haltenut
- 82: Überwurfmutter
- 83: Einschiebekonus
- 100: Ringflansch

## Patentansprüche

1. Schlauchleitung (1, 2), die als Zwei- oder Mehrkammer-Schlauchleitung ausgebildet ist und einen Außenschlauch (12) hat, dessen lichten Schlauchquerschnitt wenigstens ein innenliegender Schlauch (6) durchsetzt, wobei dem Außenschlauch (12) zumindest eine Schlauchkupplung (15) mit einem Schlauchnippel (16) zugeordnet ist, welchen Schlauchnippel (16) ein zugeordneter Schlauchendbereich des Außenschlauches (12) dicht umgreift, wobei die Schlauchkupplung (15) eine stirnseitige Aufnahmehöhlung (17) hat, in der ein Schlauchanschluss (5) für den zumindest einen innenliegenden Schlauch (6) vorgesehen ist, welcher Schlauchanschluss (5) einen in die Aufnahmehöhlung (17) der Schlauchkupplung (15) einsetzbares Außenteil (7) hat, in welchem Außenteil (7) zumindest zwei, das Außenteil (7) durchsetzende Löcher (13, 14) vorgesehen sind, von denen zumindest in einem Loch (13) das Außenteil (7) einen Schlauchendbereich des wenigstens einen innenliegenden Schlauches (6) umgreift, und wobei in den Schlauchendbereich des wenigstens einen innenliegenden Schlauches (6) ein Innenteil (8) des Schlauchanschlusses (5) vorsteht, welches Innenteil (8) derart aufgeweitet ist, dass der innenliegende Schlauch (6) zwischen dem, in diesen innenliegenden Schlauch (6) vorstehenden Innenteil (8) und dem Außenteil (7) dicht und fixierend eingespannt ist, **dadurch gekennzeichnet, dass** das Außenteil (7) einen in die Aufnahmehöhlung (17) der Schlauchkupplung (15) einsetzbaren topfförmigen Teilbereich (18) hat, und dass am Topfboden dieser Topfform ein hülsenförmiger Teilbereich (19) reduzierten Querschnitts vorsteht, in welchen hülsenförmigen Teilbereich (19) des Außenteils (7) der Schlauchendbereich des innenliegenden Schlauches (6) mittels dem Innenteil (8) des Schlauchanschlusses (5) dicht und fixierend eingespannt ist, und dass in jedem der Löcher (13, 14) im Außenteil (7) des Schlauchanschlusses (5) der Schlauchendbereich jeweils eines innenliegenden Schlauches (6) dicht und fixierend gehalten ist.

2. Schlauchleitung nach Anspruch 1, **dadurch gekennzeichnet, dass** das Innenteil (8) als Hohlniet ausgebildet und zwischen einer, in den lichten Schlauchquerschnitt des Schlauchendbereichs einführbaren Ausgangsform und einer den zumindest einen Schlauch (6) zwischen dem Innenteil (8) und dem Außenteil (7) dicht und fixierend einspannenden Aufweitform verformbar ist.

3. Schlauchleitung nach Anspruch 2, **dadurch gekennzeichnet, dass** das Innenteil (8) als Durchziehniet ausgebildet ist.

4. Schlauchleitung nach einem der Ansprüche 2 oder 3, **dadurch gekennzeichnet, dass** das Innenteil (8) an seinem über den Schlauchendbereich vorstehenden Stirnende einen radial nach außen vorstehenden Ringflansch (10) trägt.

5. Schlauchleitung nach Anspruch 4, **dadurch gekennzeichnet, dass** der Ringflansch (10) des Innenteils (8) sich zu seinem Außenrand hin verjüngt und/oder dass der Ringflansch (10) an seiner dem Schlauchendbereich abgewandten Stirnseite eine vorzugsweise konvex gewölbte Formgebung hat.

6. Schlauchleitung nach Anspruch 4 oder 5, **dadurch gekennzeichnet, dass** das Innenteil (8) in den lichten Schlauchquerschnitt einführbar ist, bis der Ringflansch (10) am benachbarten Stirnende des Außenteils (7) anliegt.

7. Schlauchleitung nach einem der Ansprüche 2 bis 6, **dadurch gekennzeichnet, dass** das Innenteil (8) in einem hülsenförmigen Teilbereich eine Wandungsstärke hat, die in Richtung zu dem dem Schlauchendbereich abgewandten Stirnende des Innenteils (8) und insbesondere zu dessen Ringflansch (10) hin zunimmt.

8. Schlauchleitung nach einem der Ansprüche 2 bis 7, **dadurch gekennzeichnet, dass** das Innenteil (8) an seinem hülsenförmigen Teilbereich außenumfangsseitig eine Halteprofilierung trägt.

9. Schlauchleitung nach Anspruch 8, **dadurch gekennzeichnet, dass** die Halteprofilierung wenigstens eine umlaufende Haltenut aufweist.

10. Schlauchleitung nach einem der Ansprüche 4 bis 9, **dadurch gekennzeichnet, dass** das Innenteil (8) zumindest in seiner unaufgeweiteten Ausgangsform in seinem lichten Durchmesser im Bereich des Ringflansches (10) eine Querschnittserweiterung aufweist, die vorzugsweise zu dem den Ringflansch (10) tragenden Stirnende des Innenteils (8) hin offen ausgebildet ist.

11. Schlauchleitung nach einem der Ansprüche 1 bis 10, **dadurch gekennzeichnet, dass** das Außenteil (7) zumindest an seinem vorstehenden hülsenförmigen Teilbereich (19) wenigstens eine Ringnut für eine Ringdichtung aufweist.

## Claims

1. Hose line (1, 2) which is configured as a dualchamber or multiple-chamber hose line and has an outer hose (12), the inside hose cross section of which is penetrated by at least one inner hose (6), the outer hose (12) being assigned at least one hose coupling (15) with a hose nipple (16), around which hose nipple (16) an associated hose end region of the outer hose (12) engages tightly, the hose coupling (15) having an end-side receiving cavity (17), in which a hose connector (5) for the at least one inner hose (6) is provided, which hose connector (5) has an outer part (7) which can be inserted into the receiving cavity (17) of the hose coupling (15), in which outer part (7) at least two holes (13, 14) which penetrate the outer part (7) are provided, of which the outer part (7) engages around a hose end region of the at least one inner hose (6) at least in one hole (13), and an inner part (8) of the hose connector (5) projecting into the hose end region of the at least one inner hose (6), which inner part (8) is widened in such a way that the inner hose (6) is clamped in a tight and fixing manner between the inner part (8), projecting into this inner hose (6), and the outer part (7), **characterized in that** the outer part (7) has a pot-shaped part region (18) which can be inserted into the receiving cavity (17) of the hose coupling (15), and **in that** a sleeve-shaped part region (19) of reduced cross section projects on the pot bottom of this pot shape, into which sleeve-shaped part region (19) of the outer part (7) the hose end region of the inner hose (6) is clamped in a tight and fixing manner by means of the inner part (8) of the hose connector (5), and **in that** the hose end region of in each case one inner hose (6) is held in a tight and fixing manner in each of the holes (13, 14) in the outer part (7) of the hose connector (5).

2. Hose line according to Claim 1, **characterized in that** the inner part (8) is configured as a hollow rivet and can be deformed between a starting shape which can be introduced into the inside hose cross section of the hose end region and a widened shape which clamps the at least one hose (6) in a tight and fixing manner between the inner part (8) and the outer part (7).

3. Hose line according to Claim 2, **characterized in that** the inner part (8) is configured as a plunge rivet.

4. Hose line according to either of Claims 2 or 3, **characterized in that** the inner part (8) supports a radially outwardly projecting annular flange (10) at its front end which projects beyond the hose end region.

5. Hose line according to Claim 4, **characterized in that** the annular flange (10) of the inner part (8) tapers towards its outer edge, and/or **in that** the annular flange (10) has a preferably convexly curved shape on its front side which faces away from the hose end region.

6. Hose line according to Claim 4 or 5, **characterized in that** the inner part (8) can be introduced into the inside hose cross section until the annular flange (10) bears against the adjacent front end of the outer part (7) .

7. Hose line according to one of Claims 2 to 6, **characterized in that**, in a sleeve-shaped part region, the inner part (8) has a wall thickness which increases in the direction towards that front end of the inner part (8) which faces away from the hose end region and, in particular, towards its annular flange (10).

8. Hose line according to one of Claims 2 to 7, **characterized in that** the inner part (8) has a retraining profiling system on the outer circumferential side on its sleeve-shaped part region.

9. Hose line according to Claim 8, **characterized in that** the retaining profiling region has at least one circumferential retaining groove.

10. Hose line according to one of Claims 4 to 9, **characterized in that**, at least in its non-widened starting shape, the inner part (8) has a cross-sectional widened portion in its inside diameter in the region of the annular flange (10), which cross-sectional widened portion is preferably of open configuration towards that front end of the inner part (8) which supports the annular flange (10).

11. Hose line according to one of Claims 1 to 10, **characterized in that**, at least on its projecting sleeve-shaped part region (19), the outer part (7) has at least one annular groove for an annular seal.

## Revendications

1. Conduite de tuyau flexible (1, 2) qui est configurée comme une conduite de tuyau flexible à deux cavités ou davantage et possède un tuyau flexible extérieur (12), dont la section intérieure de tuyau flexible contient au moins un tuyau flexible intérieur (6), dans laquelle au moins un couplage de tuyau flexible (15) avec un raccord de tuyau flexible (16) est associé au tuyau flexible extérieur (12), lequel raccord de tuyau flexible (16) entoure de manière étanche une zone de tuyau flexible associée du tuyau flexible extérieur (12), dans laquelle le couplage de tuyau flexible (15) a une cavité de réception frontale (17) dans laquelle un raccord de tuyau flexible (5) est prévu pour l'au moins un tuyau flexible intérieur (6), lequel raccord de tuyau flexible (5) possède une partie extérieure (7) pouvant être insérée dans la cavité de réception (17) du couplage de tuyau flexible (15), dans cette partie extérieure (7) étant prévus au moins deux trous (13, 14) traversant la partie extérieure (7), dans au moins un de ces trous (13) la partie extérieure (7) entourant une zone de tuyau flexible de l'au moins un tuyau flexible intérieur (6), et dans laquelle une partie intérieure (8) du raccord de tuyau flexible (5) fait saillie dans la zone de tuyau flexible de l'au moins un tuyau flexible intérieur (6), laquelle partie intérieure (8) est évasée de sorte que le tuyau flexible intérieur (6) est serré de manière étanche et fixé entre la partie intérieure (8) faisant saillie dans ce tuyau flexible intérieur (6) et la partie extérieure (7), **caractérisée en ce que** la partie extérieure (7) possède une zone partielle en forme de pot (18) pouvant être insérée dans la cavité de réception (17) du couplage de tuyau flexible (15), que sur le fond de pot de cette forme de pot fait saillie une zone partielle en forme de douille (19) de section réduite, dans laquelle zone partielle en forme de douille (19) de la partie extérieure (7), l'extrémité de tuyau flexible du tuyau flexible intérieur (6) est serrée de manière étanche et fixée au moyen de la partie intérieure (8) du raccord de tuyau flexible (5), et qu'un tuyau flexible intérieur (6) est maintenu de manière étanche et fixé dans chacun des trous (13, 14) de la partie extérieure (7) du raccord de tuyau flexible (5) de l'extrémité de tuyau.

2. Conduite de tuyau flexible selon la revendication 1, **caractérisée en ce que** la partie intérieure (8) est configurée comme un rivet creux et peut être déformée entre une forme initiale pouvant être insérée dans la section intérieure de tuyau flexible de l'extrémité de tuyau flexible et une forme évasée serrant de manière étanche et fixant l'au moins un tuyau flexible (6) entre la partie intérieure (8) et la partie extérieure (7).

3. Conduite de tuyau flexible selon la revendication 2, **caractérisée en ce que** la partie intérieure (8) est configurée comme un rivet traversant.

4. Conduite de tuyau flexible selon une des revendications 2 ou 3, **caractérisée en ce que** la partie intérieure (8) porte à son extrémité frontale saillant au-delà de l'extrémité de tuyau une bride annulaire (10) saillant radialement vers l'extérieur.

5. Conduite de tuyau flexible selon la revendication 4, **caractérisée en ce que** la bride annulaire (10) de la partie intérieure (8) se rétrécit en direction de son bord extérieur et/ou que la bride annulaire (10) a une forme bombée de préférence de manière convexe au niveau de sa face frontale opposée à l'extrémité de tuyau flexible.

6. Conduite de tuyau flexible selon la revendication 4 ou 5, **caractérisée en ce que** la partie intérieure (8) peut être insérée dans la section de tuyau flexible intérieure jusqu'à ce que la bride annulaire (10) repose contre l'extrémité frontale voisine de la partie extérieure (7).

7. Conduite de tuyau flexible selon une des revendications 2 à 6, **caractérisée en ce que** la partie intérieure (8) a dans une zone partielle en forme de douille une épaisseur de paroi qui augmente en direction de l'extrémité frontale de la partie intérieure (8) opposée à l'extrémité de tuyau et en particulier de sa bride annulaire (10).

8. Conduite de tuyau flexible selon une des revendications 2 à 7, **caractérisée en ce que** la partie intérieure (8) porte au niveau de sa zone partielle en forme de douille un profil de fixation du côté de la périphérie extérieure.

9. Conduite de tuyau flexible selon la revendication 8, **caractérisée en ce que** le profil de fixation comporte au moins une rainure de fixation périphérique.

10. Conduite de tuyau flexible selon une des revendications 4 à 9, **caractérisée en ce que** la partie intérieure (8) présente, au moins dans sa forme initiale non évasée, dans son diamètre intérieur dans la zone de la bride annulaire (10), un élargissement de section qui est de préférence ouvert en direction de l'extrémité frontale de la partie intérieure (8) portant la bride annulaire (10).

11. Conduite de tuyau flexible selon une des revendications 1 à 10, **caractérisée en ce que** la partie extérieure (7) présente au niveau de sa zone partielle saillante en forme de douille (19) au moins une rainure annulaire destinée à un joint annulaire.
